# EUROPÄISCHE PATENTSCHRIFT

(11) **EP 3 094 527 B1**
(45) Veröffentlichungstag und Bekanntmachung des Hinweises auf die Patenterteilung: **29.04.2020**
(21) Anmeldenummer: 15700228.8
(22) Anmeldetag: 13.01.2015
(51) Int. Cl.: B60S 9/22, B60S 9/08

(54) **STÜTZWINDE**
SEMI-TRAILER LANDING GEAR
BÉQUILLE DE SÉCURITÉ

(30) Priorität: 14.01.2014 DE 102014200486
(43) Veröffentlichungstag der Anmeldung: 23.11.2016
(73) Patentinhaber: SAF-HOLLAND GmbH, 63856 Bessenbach (DE)
(72) Erfinder: RIEDL, Reinhold, 14089 Berlin (DE); WALLMEIER, Stefan, 63773 Goldbach (DE)
(74) Vertreter: Müller Schupfner & Partner Patent- und Rechtsanwaltspartnerschaft mbB
(86) Internationale Anmeldenummer: PCT/EP2015/050455
(87) Internationale Veröffentlichungsnummer: WO 2015/107033

(56) Entgegenhaltungen:
- EP-A1- 1 595 761
- DE-A1-102005 034 552
- DE-U1- 29 817 050
- DE-U1-202009 014 883
- DE-U1-202010 008 603
- US-A- 5 348 258

## Beschreibung

Die vorliegende Erfindung betrifft Stützwinden, insbesondere für Anhänger von Nutzfahrzeugen.

Stützwinden der in Rede stehenden Art sind grundsätzlich aus dem Stand der Technik bekannt. Sie dienen vornehmlich dazu, Anhänger, beispielsweise von Nutzfahrzeugen, abzustützen. Bei den bekannten Stützwinden ist an einer Rückseite eines Außenstützrohrs der Stützwinde meist eine Platte angebracht, welche zur Befestigung der Stützwinde beispielsweise an den Anhänger genutzt wird. Diese Platte ist so groß dimensioniert, dass sie links und rechts (d. h. quer zur Ein- und Ausfahrrichtung der Stützwinde) über das Außenstützrohr übersteht, um dort jeweils eine Reihe vertikal angeordneter Befestigungsschrauben in entsprechenden Löchern der Platte aufzunehmen. Dies bedeutet, dass eine solche Platte wegen ihrer Stärke und der seitlichen Überstände ungünstigerweise einen erhöhten Materialbedarf bedingt. Zusätzlich erfordert die Anordnung und Positionierung einer derartigen Platte einen zusätzlichen Montageschritt in der Fertigung. Auch die Montage der Stützwinde an den Anhänger ist aufwendig, da bei den bekannten Stützwinden immer separate Befestigungsmittel, beispielsweise in Form von Schrauben oder Bolzen, benötigt werden.

Die DE 10 2005 034 552 A1 offenbart den Oberbegriff des Anspruchs 1 und betrifft eine Stützwinde mit einem in seiner Höhe teleskopartig verfahrbaren, eine Außenhülse und eine Innenhülse aufweisenden Abstützelement, wobei die Außenhülse einen Befestigungsflansch zum Anbringen an ein Fahrzeug umfasst.

Die DE 20 2010 008 603 U1 offenbart den Oberbegriff des Anspruchs 2 und betrifft eine Stützvorrichtung für Sattelauflieger mit wenigstens einem teleskopierbaren Stützbein, wobei das Stützbein einen Befestigungskopf hat, an dem es am Sattelauflieger befestigt ist und eine Lastausgleichseinrichtung am Stützbein vorgesehen ist, die lateral entstehende Ausgleichsbewegungen am Stützbein zulässt.

Die EP 1 595 761 A1 betrifft eine höhenverstellbare Stütze für Sattelauflieger mit einem ortsfest angebrachten Stützenaußenrohr und einem darin längs verschiebbar angeordneten Stützeninnenrohr.

Die DE 298 17 050 U1 betrifft eine Stützvorrichtung für Wohnmobile mit einem schwenkbar am Fahrzeugboden abgestützten Stützteil, wobei ein Außenrohr des Stützteils in der Nicht-Gebrauchsstellung durch einen Schnappriegel an einem Trägerteil verriegelbar ist.

Die DE 20 2009 014 883 U1 und die US-5,348,258 betreffen Stützvorrichtungen für Anhänger oder Wohnmobile mit zwei teleskopartig zueinander verfahrbaren Stützenrohren, wobei an dem Innenrohr ein Stützfuß vorgesehen ist.

Die US-4,635,904 und die US-5,238,266 offenbaren höhenverstellbare Stützen für Sattelauflieger mit einem ortsfest angebrachten Stützenaußenrohr und einem darin längs verschiebbar angeordneten Stützeninnenrohr.

Es ist daher Aufgabe der vorliegenden Erfindung, Stützwinden, insbesondere für Nutzfahrzeuganhänger, bereitzustellen, die kostengünstig herzustellen und leicht montierbar bzw. handhabbar sind und dabei ein geringes Gewicht aufweisen.

Diese Aufgabe wird durch eine Stützwinde gemäß Anspruch 1 sowie durch eine Stützwinde gemäß Anspruch 2 gelöst. Weitere Vorteile und Merkmale der Erfindung ergeben sich aus den Unteransprüchen sowie der Beschreibung und den beigefügten Figuren.

Erfindungsgemäß ist eine Stützwinde, insbesondere für Anhänger von Nutzfahrzeugen, vorgesehen, wobei die Stützwinde sich entlang einer Längsachse erstreckt und ein Außenstützrohr und/oder eine Getriebebox umfasst, wobei das Außenstützrohr und/oder die Getriebebox eine Außenwand umfassen, und wobei die Außenwand eine Befestigungsseite umfasst, wobei im Bereich der Befestigungsseite zumindest ein Befestigungsabschnitt ausgebildet ist, und wobei der Befestigungsabschnitt ausgelegt ist, die Stützwinde an einem weiteren Element, insbesondere einem Anhänger, zu befestigen und/oder anzuordnen. Zweckmäßigerweise ist innerhalb des Außenstützrohrs ein Innenstützrohr angeordnet bzw. anordenbar, welches entlang der Längsachse verfahrbar ist. Über das Verfahren des Innenstützrohrs wird letztendlich eine Abstützhöhe der Stützwinde angepasst. Während also das Außenstützrohr und/oder die Getriebebox der Stützwinde mit Vorteil über ihre Befestigungsseite an dem Anhänger befestigt sind, kann das Innenstützrohr ausfahren und sich, bevorzugt über einen entsprechend am unteren Ende des Innenstützrohrs (beweglich) angeordneten Fuß, auf dem Boden abstützen. Der Antrieb bzw. die Betätigung der Stützwinde und insbesondere des Innenstützrohrs erfolgt bevorzugt über eine Handkurbel oder dergleichen. Vorteilhafterweise kommt zur Übertragung der Drehbewegung der Handkurbel bzw. allgemein einer Eingangswelle der Stützwinde ein Spindeltrieb oder dergleichen zum Einsatz. Der Spindeltrieb ist mit Vorteil mit einem Getriebe gekoppelt, welches in der Getriebebox angeordnet ist. Mit Vorteil weisen das Außenstützrohr und/oder die Getriebebox quer zur Längsachse bzw. entlang der Längsachse gesehen einen im Wesentlichen viereckigen, insbesondere auch quadratischen Querschnitt auf. Mit anderen Worten weisen das Außenstützrohr und/oder die Getriebebox demzufolge mit Vorteil vier Seiten bzw. Seitenflächen auf, wobei diejenige der vier Seiten, welche dem weiteren Element, also dem Element, an welchem die Stützwinde angeordnet werden soll, zugewandt ist, als die Befestigungsseite bezeichnet wird. Es versteht sich, dass die Befestigungsseite geometrisch bedingt im Wesentlichen quer zur Längsachse eine gewisse Breite aufweist. Zweckmäßigerweise definiert die Breite den Bereich der Befestigungsseite, der den zumindest einen Befestigungsabschnitt ausbildet. Dies bedeutet, dass der Bereich der Befestigungsseite, welcher den zumindest einen Befestigungsabschnitt ausbildet, auch nur so breit ist, wie das Außenstützrohr oder die Getriebebox. Dabei wird nicht zwingend auf die maximale Breite der Getriebebox oder des Außenstützrohrs abgestellt. Diese kann entlang der Längsachse durchaus unterschiedlich ausgebildet sein (vorzugsweise ist aber eine maximale Breite des Außenstützrohrs oder der Getriebebox maßgeblich). Entscheidend ist der Bereich, in dem die Befestigungsabschnitte angeordnet sind, damit die Befestigungsabschnitte nicht beispielsweise links und/oder rechts über das Außenstützrohr und/oder die Getriebebox überstehen bzw. daneben angeordnet sind. Bevorzugt handelt es sich bei der Außenwand um ein Blech aus Aluminium oder Stahl. Dabei kann die Außenwand des Außenstützrohrs bzw. der Getriebebox im Wesentlichen einteilig ausgebildet sein. Es kann sich aber auch um eine Schweißkonstruktion handeln. Die Befestigungsseite bzw. die Außenwand in diesem Bereich muss nicht glatt oder eben ausgebildet sein, sondern kann ggf. auch Vor- und/oder Rücksprünge aufweisen, welche beispielsweise die Anordnung der Stützwinde an dem weiteren Element erleichtern bzw. den Kraftfluss hierbei verbessern können.

Zweckmäßigerweise ist der Befestigungsabschnitt durch die Außenwand und/oder durch ein Verstärkungselement gebildet, welches an der Befestigungsseite angeordnet ist. Mit Vorteil wird der Befestigungsabschnitt also durch die Außenwand selbst gebildet, was besonders hinsichtlich des Materialbedarfs von Vorteil ist, da keine zusätzliche Platte oder dergleichen angeschweißt werden muss. Ebenfalls bevorzugt kann der Befestigungsabschnitt auch durch das Verstärkungselement bzw. durch die Kombination der Außenwand mit dem Verstärkungselement gebildet sein. Es versteht sich, dass das Verstärkungselement, wie auch allgemein der Befestigungsabschnitt, zweckmäßigerweise unter Berücksichtigung der auftretenden Belastungen möglichst klein dimensioniert ist. Dies gilt sowohl hinsichtlich der Fläche als auch hinsichtlich der Dicke. Mit Vorteil ist das Verstärkungselement aus Stahl oder Aluminiumblech mit einer Wandstärke in einem Bereich von etwa 0,3 bis 3,0 cm, bevorzugt in einem Bereich von 0,5 bis 2,5 cm und ganz bevorzugt in einem Bereich von 0,6 bis 1,5 cm ausgebildet. Mit Vorteil weist das Verstärkungselement eine im Wesentlichen rechteckige Form auf, wobei sich die lange Seite des Rechtecks mit Vorteil entlang der Längsachse erstreckt. Zweckmäßigerweise beträgt ein Verhältnis der langen zur kurzen Seite in etwa 1:1, weiter bevorzugt ist es in etwa größer als etwa 3:1 und ganz besonders bevorzugt größer als etwa 5:1. Ebenfalls bevorzugt kann auch die Anordnung einer Befestigungsplatte an der Außenwand, insbesondere am Außenstützrohr, sein, wobei die Befestigungsplatte mit Vorteil den zumindest einen Befestigungsabschnitt ausbildet bzw. umfasst. Die Befestigungsplatte ist ebenfalls bevorzugt aus Stahl oder Aluminium gefertigt und bevorzugt form- und/oder kraftschlüssig mit dem Außenstützrohr verbunden. Es können auch mehrere Befestigungsplatten vorgesehen sein, welche entlang der Längsachse an der Stützwinde bzw. an dessen Außenstützrohr angeordnet sind.

Bevorzugt ist eine Wanddicke des Befestigungsabschnitts größer als eine Wanddicke der Außenwand, wobei die Wanddicke des Befestigungsabschnitts insbesondere durch ein Anordnen des Verstärkungselements und/oder ein Umformen der Außenwand bestimmbar ist, wobei das Umformen eine Aufdopplung der Außenwand bewirken kann. Hierbei ist besonders das Verhältnis der Wanddicke des Befestigungsabschnitts zur Wanddicke der Außenwand vorteilhaft ausgelegt. Hinsichtlich des Gewichts der Stützwinde und der auftretenden Kräfte bzw. abzustützenden Gewichte bei (Nutzfahrzeug-)Anhängern ist es von Vorteil, wenn die Wanddicke des Befestigungsabschnitts etwa 1,1 bis 1,5 mal größer ist als die Wanddicke der Außenwand, bevorzugt etwa 1,5 bis 2,5 mal so groß und ebenfalls bevorzugt etwa 2,5 bis 3,5 mal so groß. Es versteht sich, dass bei der Bestimmung der Wanddicke des Befestigungsabschnitts eine Wanddicke des Verstärkungselements hinzugezählt wird, wenn dieses derart an der Außenwand befestigt ist, dass die Außenwand zusammen mit dem Verstärkungselement den Befestigungsabschnitt bildet. Es kann aber auch der Fall sein, dass nur die Außenwand oder nur das Verstärkungselement den Befestigungsabschnitt bilden. Die angesprochenen Maße gelten dann analog. Mit Vorteil ist die Außenwand auch im Bereich der Befestigungsseite derart umgeformt oder umgeknickt, dass ein Befestigungsabschnitt ausgebildet werden kann, und dass dieser eine Wanddicke aufweist, welche größer ist als die Wanddicke der Außenwand selbst. Hierzu wird die Außenwand mittels geeigneter Umformverfahren derart umgeformt, dass die Außenwand zumindest bereichsweise "aufgedoppelt" ist. Zweckmäßigerweise können auf diese Weise gezielt und bereichsweise Befestigungsabschnitte an der Befestigungsseite der Stützwinde gebildet werden.

Erfindungsgemäß ist eine Stützwinde vorgesehen, wobei der Befestigungsabschnitt zumindest ein Befestigungselement umfasst, und/oder wobei der Befestigungsabschnitt zur Anordnung und/oder Befestigung des zumindest einen Befestigungselements zumindest einen Anordnungsabschnitt umfasst, wobei ein Verhältnis eines Abstands der Befestigungselemente und/oder Anordnungsabschnitte zweier Befestigungsabschnitte quer zur Längsachse der Stützwinde zu einer Breite der Getriebebox und/oder des Außenstützrohrs in diesem Bereich kleiner 1 ist. Es versteht sich, dass der Abstand der Befestigungsabschnitte bzw. der Befestigungselemente/Anordnungsabschnitte an die bestehenden Maße und Dimensionen, welche an den Anhängern zur Anordnung von Stützwinden vorgesehen sind, angepasst sind bzw. diesen entsprechen. Mit Vorteil weist der Befestigungsabschnitt also zumindest ein Befestigungselement oder zumindest einen Anordnungsabschnitt auf. Ebenfalls kann der Befestigungsabschnitt aber auch zumindest ein Befestigungselement und zumindest einen Anordnungsabschnitt umfassen. Dabei weist das Befestigungselement zweckmäßigerweise die Form eines Bolzens oder Stiftes auf. Ein derartiges Befestigungselement ist mit Vorteil nicht lösbar mit dem Befestigungselement verbunden, beispielsweise stoffschlüssig über eine Schweißverbindung. Dazu muss nicht zwingend ein Anordnungsabschnitt vorgesehen sein. Das Befestigungselement kann aber auch in dem Anordnungsabschnitt angeordnet werden, wobei unterschieden werden muss, ob es dann nicht lösbar, beispielsweise über eine Schweißverbindung, an dem Befestigungselement und an dem Anordnungsabschnitt befestigt wird oder nicht. Zweckmäßigerweise bietet die Stützwinde also drei Montagevarianten, wobei bei einer ersten (i) Montagevariante der oder die Befestigungsabschnitte einen oder mehrere Befestigungselemente aufweisen, welche (orts-)fest und nicht lösbar mit dem Befestigungsabschnitt verbunden sind. Diese Befestigungselemente, welche vorteilhafterweise mit einem Gewinde versehen sind, werden in entsprechende Löcher des weiteren Elements, nachfolgend vereinfachend Anhänger genannt, eingeführt und können dort angeschraubt werden. Bei einer zweiten (ii) Montagevariante weist der Anhänger entsprechende, fest angeordnete Bolzen, Stifte oder Gewinde auf, welche in die Anordnungsabschnitte des oder der Befestigungsabschnitte eingeführt werden können. Die Befestigung erfolgt dann bevorzugt mit entsprechenden Mutter oder Stiften. Als dritte (iii) Montagevariante ist vorgesehen, dass die Befestigungsabschnitte und der Anhänger (bzw. das weitere Element) einen oder mehrere Anordnungsabschnitte aufweisen, wobei die Befestigung unter Verwendung entsprechender Schrauben, Bolzen, Stifte oder dergleichen erfolgt. In diesem Fall weist also weder der Anhänger noch die Stützwinde "fest" angeordnete Befestigungsmittel auf. Es versteht sich aber, dass auch Kombinationen aus den Montagevarianten (i), (ii) und (iii) möglich sind. Mit Vorteil weist der Befestigungsabschnitt eine vorzugsweise geradzahlige Vielzahl, beispielsweise 2, 4, 6, 8 oder mehr Befestigungselemente und/oder Anordnungsabschnitte auf. Der Anordnungsabschnitt an sich ist mit Vorteil rund, insbesondere kreisrund, und/oder oval ausgebildet, wobei der Anordnungsabschnitt im Wesentlichen dazu ausgelegt ist, dass in ihm das Befestigungselement, welches bevorzugt als Bolzen, Schraube oder Stift ausgebildet ist, angeordnet werden kann. Mit Vorteil sind am Außenstützrohr bzw. an der Getriebebox zwei Befestigungsabschnitte ausgebildet, welche sich mit Vorteil entlang der Längsachse erstrecken, wobei sich die Vielzahl von Befestigungselementen bzw. Anordnungsabschnitte entlang der Längsachse erstreckt. Mit Vorteil liegt das oben genannte Verhältnis des Abstands der Befestigungselemente und/oder der Anordnungsabschnitte auch in einem Bereich von 0,7 bis 0,9. Mit Vorteil wird durch das Verhältnis, welches kleiner als 1 ist, erreicht, dass die Befestigungsabschnitte nur im Bereich der Befestigungsseite der Stützwinde ausgebildet sind und seitlich nicht überstehen. Es versteht sich, dass auch entlang der Längsachse mehrere Befestigungsabschnitt, beispielsweise 2, 3, 4 oder mehr vorgesehen sein können. Es versteht sich, dass die vorgenannten Merkmale und Vorteil in gleicher Weise für Befestigungsabschnitte gelten, welche an einer Befestigungsplatte angeordnet sind bzw. durch diese gebildet werden.

Erfindungsgemäß weist die Außenwand zumindest eine Montageöffnung auf, welche einen Zugang zum Anordnungsabschnitt von einer Innenseite der Stützwinde bereitstellt. Es versteht sich, dass der oder die Anordnungsabschnitte von einer Innenseite der Stützwinde hin gegebenenfalls nicht ohne Weiteres zugänglich sind, wenn der Befestigungsabschnitt beispielsweise durch die Außenwand selbst gebildet wird und nicht seitlich übersteht. Mit Vorteil ermöglicht die Montageöffnung einen Zugang von der Innenseite der Stützwinde her, wobei die Montageöffnung im Wesentlichen gegenüberliegend der Befestigungsseite angeordnet ist, insbesondere gegenüberliegend dem Bereich der Befestigungsseite, welcher den oder die Befestigungsabschnitte umfasst. Mit Vorteil ist die Montageöffnung als Loch oder Öffnung in der der Befestigungsseite gegenüberliegenden Außenwand des Außenstützrohrs oder der Getriebebox ausgebildet, wobei das Loch bzw. die Öffnung zweckmäßigerweise so groß ist, dass das Befestigungselement über die Öffnung in dem Anordnungsabschnitt angeordnet werden kann und/oder das Befestigungselement mit einem Werkzeug, welches durch die Montageöffnung geführt wird, erreicht werden kann, um so die Stützwinde an das weitere Element zu befestigen. Es versteht sich, dass die Montageöffnung entlang der Längsachse gesehen mit Vorteil im Wesentlichen auf der gleichen Höhe wie der oder die Befestigungsabschnitte liegt. Es versteht sich weiter, dass, wenn mehrere Befestigungsabschnitte mit mehreren Befestigungselementen und/oder Anordnungsabschnitten vorgesehen sind, dementsprechend auch mehrere Montageöffnungen nützlich sein können bzw. eine Montageöffnung ausreichend dimensioniert ist, um alle Anordnungsabschnitte erreichen zu können.

Erfindungsgemäß ist die Montageöffnung durch das Verfahren bzw. eine Verlagerung des Innenstützrohrs der Stützwinde entlang der Längsachse verschließbar. Zweckmäßigerweise weist das Innenstützrohr eine erste Position bzw. Ruheposition auf, in welcher es eingefahren ist, und in welcher es keinen Kontakt mit dem Boden bzw. der Fahrbahnebene hat. Außerdem weist das Innenstützrohr mit Vorteil eine zweite Position bzw. Betriebsposition auf, in welchem es ausgefahren ist, wobei es in der zweiten Position Kontakt mit der Fahrbahnebene hat und seine eigentliche Stützfunktion erfüllt. Mit Vorteil ist die Montageöffnung bzw. sind die Montageöffnungen in der ersten Position des Innenstützrohrs verschlossen. Damit sind die Anordnungsabschnitte nicht mehr zugänglich, so dass die Stützwinde idealerweise nicht mehr entfernt werden kann, was einen ausgezeichneten Diebstahlschutz darstellt. Dies gilt insbesondere für die oben beschriebenen Montagevariante (ii).

Zweckmäßigerweise weist die Außenwand eine zur Innenseite der Stützwinde hin gerichtete Aussparung auf, in welcher das Befestigungselement zumindest bereichsweise derart anordenbar ist, dass das Verfahren des Innenstützrohrs entlang der Längsachse durch das Befestigungselement zweckmäßigerweise nicht behindert ist. Mit Vorteil kann die Aussparung als Senkbohrung ausgebildet sein, um das Befestigungselement, welches bevorzugt als Schraube mit einem Senckopf ausgebildet ist, übergangslos in der Außenwand anzuordnen, so dass ein Verfahren des Innenstützrohrs entlang der Längsachse nicht behindert wird. Es versteht sich, dass mit Vorteil die Aussparung auch so groß ausgebildet sein kann, dass eine Mutter oder dergleichen darin mit Vorteil formschlüssig anordenbar ist oder zumindest derart, dass die Mutter in der Außenwand versenkt werden kann, so dass das Innenstützrohr innerhalb des Außenstützrohrs beim Verfahren nicht behindert wird. Alternativ bevorzugt kann aber auch vorgesehen sein, das Befestigungselement oder zumindest ein Abschnitt dessen, als Anschlag zu verwenden, welcher ein weiteres Verfahren des Innenstützrohrs entlang der Längsachse verhindert.

Zweckmäßigerweise sind das Verstärkungselement und/oder die aufgedoppelte Außenwand zumindest bereichsweise im Wesentlichen senkrecht zur Befestigungsseite derart voneinander beabstandet, dass ein Zwischenraum gebildet ist. Damit kann es möglich sein, gegebenenfalls auf eine Montageöffnung zu verzichten, da das Befestigungselement bzw. die Befestigungselemente nicht von einer Innenseite der Stützwinde her gesehen in den Anordnungsabschnitten angeordnet werden müssen. Bevorzugt weist der Zwischenraum im Wesentlichen senkrecht zur Befestigungsseite eine Dicke von etwa 0,5 bis 3, besonders bevorzugt etwa 0,8 bis 2,5 und ganz besonders bevorzugt eine Dicke von etwa 1 bis 2 cm auf. Mit Vorteil ist der Zwischenraum auch gerade so dick, dass ein Schraubenkopf einer Schraube mit einem Gewindedurchmesser von 10 und/oder 12 mm gerade Platz findet. Mit Vorteil kann die Schraube durch den Zwischenraum sozusagen "gehalten" oder arretiert werden, was eine deutliche Vereinfachung bei der Montage bewirken kann. Es versteht sich, dass die genannten Maßangaben auch gelten, wenn eine (Schrauben-)Mutter oder ein Stift etc. in dem Zwischenraum angeordnet werden.

Zweckmäßigerweise weist der Anordnungsabschnitt zumindest einen Zugangsbereich auf, welcher eine Anordnung des Befestigungselements quer zur Längsachse ermöglicht. Der Zugangsbereich stellt sozusagen eine Öffnung des Anordnungsabschnitts dar, über welche das Befestigungselement, beispielsweise ausgebildet als Schraube, Stift oder Bolzen, eingeführt werden kann.

Mit Vorteil erstreckt sich das Befestigungselement im Wesentlichen von dem Befestigungsabschnitt weg, wobei der Befestigungsabschnitt und das Befestigungselement insbesondere einstückig ausgebildet sind. Mit anderen Worten ist das Befestigungselement mit Vorteil stoffschlüssig bzw. nicht ohne Weiteres lösbar mit dem Befestigungsabschnitt verbunden, beispielsweise, indem es angeschweißt ist. Es versteht sich, dass das Befestigungselement und der Befestigungsabschnitt aber auch einteilig geformt sein können, beispielsweise durch einen Gieß- oder Umformprozess. Wie bereits angedeutet, muss für eine stoffschlüssige Verbindung, beispielsweise über ein Schweißverfahren, zur Befestigung des Befestigungselements am Befestigungsabschnitt nicht zwingend ein Anordnungsabschnitt vorgesehen sein.

Erfindungsgemäß ist eine Stützwinde vorgesehen, welche einen erfindungsgemäßen Befestigungsabschnitt umfasst. Es versteht sich, dass die genannten Vorteile des Befestigungsabschnitts nicht auf die Form des Außenstützrohrs sowie der Getriebebox bzw. deren Breiten beschränkt sind. Stattdessen kann mit Vorteil auch vorgesehen sein, dass die Stützwinde, insbesondere an ihrem Außenstützrohr, eine Befestigungsplatte aufweist, welche zumindest einen Befestigungsabschnitt ausbildet, der die vorgenannten Merkmale und Vorteil aufweist. Insbesondere ist bevorzugt vorgesehen, dass die Befestigungsplatte parallel zur Längsachse zwei Befestigungsabschnitte aufweist, welche jeweils, in einer Reihe entlang der Längsachse angeordnet, 3, 4, 5, 6, 8 oder mehr fest (nicht lösbar) angeordnete Befestigungselemente, beispielsweise in Form von Schrauben oder Bolzen, aufweist.

Weitere Vorteile und Merkmale ergeben sich aus der nachfolgenden Beschreibung bevorzugter Ausführungsformen der erfindungsgemäßen Stützwinden mit Bezug auf die beigefügten Figuren. Einzelne Merkmale der einzelnen Ausführungsformen können dabei im Rahmen der Erfindung miteinander kombiniert werden.

Es zeigen:
- Figur 1:: eine bevorzugte Ausführungsform einer Stützwinde in einer Schnittdarstellung quer zu einer Längsachse L;
- Figur 2:: eine weitere bevorzugte Ausführungsform einer Stützwinde mit einer Außenwand, die überlappend ausgebildet ist;
- Figur 3:: eine weitere bevorzugte Ausführungsform einer Stützwinde in einer Schnittdarstellung mit einer aufgedoppelten Außenwand;
- Figur 4:: eine weitere bevorzugte Ausführungsform einer Stützwinde mit einer aufgedoppelten Außenwand;
- Figur 5a:: eine Teilansicht einer bevorzugten Ausführungsform eines Befestigungsabschnitts, deren Anordnungsabschnitte Zugangsbereiche aufweisen;
- Figur 5b:: eine teilweise Schnittdarstellung einer bevorzugten Ausführungsform einer Stützwinde entlang einer parallel zu einer Längsachse mit einem über einen Zugangsbereich angeordneten Befestigungselement;
- Figur 6a:: eine bevorzugte Ausführungsform eines Verstärkungselements mit einem Zugangsbereich, dargestellt in einer Schnittdarstellung;
- Figur 6b:: die aus Figur 6a bekannte Ausführungsform eines Verstärkungselements mit einem daran angeordneten Befestigungselement;
- Figur 7:: eine Draufsicht auf eine bevorzugte Ausführungsform einer Getriebebox mit zwei im Bereich der Befestigungsseite angeordneten Befestigungsabschnitten;
- Figur 8a:: eine schematische Darstellung einer bevorzugten Ausführungsform einer Stützwinde in einer Seitenansicht;
- Figur 8b:: eine bevorzugte Ausführungsform einer Befestigungsplatte mit zwei Befestigungsabschnitten, angeordnet an einem Außenstützrohr;
- Figur 8c:: eine weitere bevorzugte Ausführungsform einer Befestigungsplatte mit zwei Befestigungsabschnitten, angeordnet an einem Außenstützrohr.

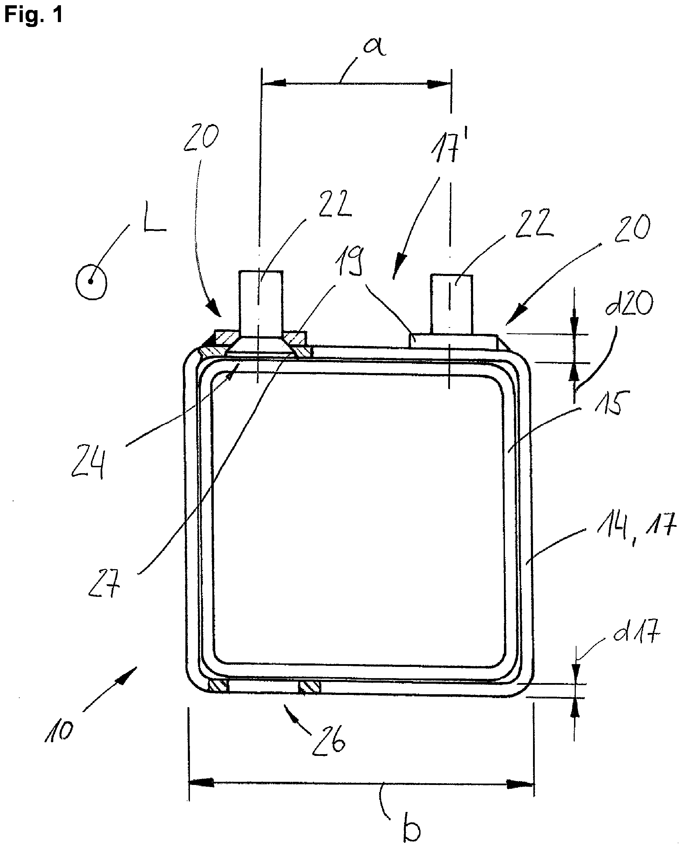

**Fig. 1** zeigt eine bevorzugte Ausführungsform einer Stützwinde 10 in einer Schnittdarstellung quer zur Längsachse L. Die Stützwinde 10 umfasst ein Außenstützrohr 14, innerhalb dessen ein Innenstützrohr 15 angeordnet ist. Das Innenstützrohr 15 ist entlang der Längsachse L verfahrbar. Das Außenstützrohr 14 besteht aus einer Außenwand 17, welche eine Montageöffnung 26 aufweist. Gegenüberliegend der Montageöffnung befindet sich eine Befestigungsseite 17'. Die Befestigungsseite 17' umfasst zwei Befestigungsabschnitte 20, welche durch die Außenwand 17 in Kombination mit zwei an der Außenwand 17 angeordneten Verstärkungselementen 19 gebildet ist. Die Befestigungsabschnitte 20 weisen Anordnungsabschnitte 24 auf, innerhalb derer Befestigungselemente 22 (hier als Senckopfschrauben ausgebildet) angeordnet sind. Mit Vorteil sind die Befestigungselemente 22 durch die Aussparungen 27 ohne einen Überstand innerhalb der Außenwand 17 derart anordenbar, dass das Innenstützrohr 15 innerhalb des Außenstützrohrs 14 verfahrbar ist. Eine Dicke d20 ist größer als eine Dicke d17 der Außenwand 17. Das Verhältnis eines Abstands a der beiden Befestigungselemente 22 im Vergleich zu einer Breite b der Stützwinde 10 ist kleiner als 1.

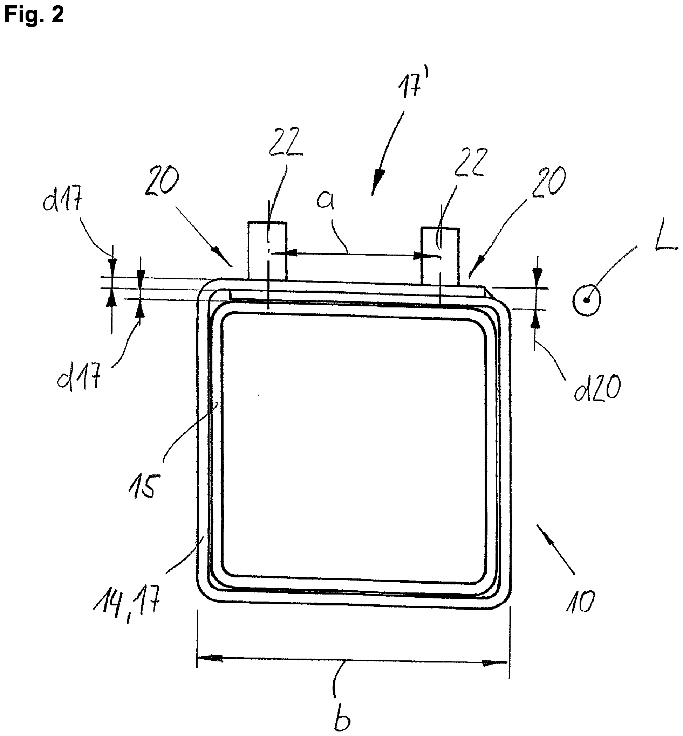

**Fig. 2** zeigt eine weitere bevorzugte Ausführungsform einer Stützwinde 10, wobei eine Außenwand 17 im Bereich einer Befestigungsseite 17' aufgedoppelt ist. Über diese Gestaltung werden zwei Befestigungsabschnitte 20 gebildet, welche jeweils zumindest ein Befestigungselement 22 umfassen, welche in einem Abstand a quer zu einer Längsachse L angeordnet sind. Der Abstand a ist kleiner als eine Breite b des Außenstützrohrs 14. Innerhalb des Außenstützrohrs 14 ist ein Innenstützrohr 15 verlagerbar entlang der Längsachse L angeordnet. Das Außenstützrohr 14 weist eine Außenwand 17 mit einer Dicke d17 auf. Durch die in Figur 2 dargestellte Ausführung der Befestigungsabschnitte ergibt sich für die Befestigungsabschnitte eine Dicke d20, welche im Wesentlichen zweimal einer Dicke d17 der Außenwand 17 entspricht.

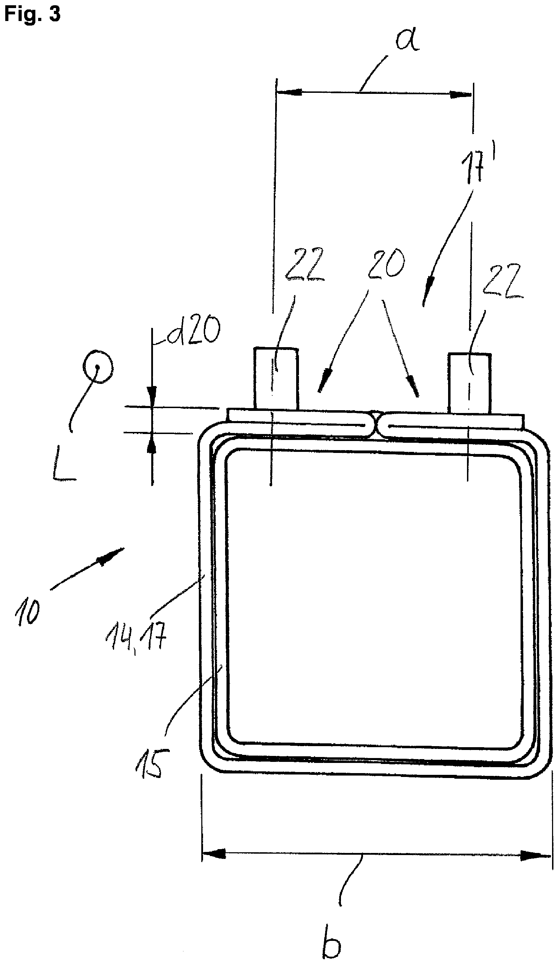

**Fig. 3** zeigt eine weitere bevorzugte Ausführungsform einer Stützwinde 10, welche im Bereich einer Befestigungsseite 17' zwei Befestigungsabschnitte 20 aufweist. Die Befestigungsabschnitte 20 sind dadurch gebildet, dass eine Außenwand 17 aufgedoppelt wurde. Dies wird durch ein entsprechendes Umformen der Außenwand 17 in diesem Bereich ermöglicht. Innerhalb der Befestigungsabschnitte 20 sind Befestigungselemente 22 angeordnet. Eine Dicke d20 des Befestigungsabschnitts 20 bzw. der Befestigungsabschnitte 20 entspricht im Wesentlichen zweimal einer Wanddicke der Außenwand (hier nicht näher bezeichnet). Eine Breite b der Stützwinde 10 ist größer als ein Abstand a der beiden Befestigungselemente 22. Mit anderen Worten liegen die beiden Befestigungselemente 22 bzw. die Befestigungsabschnitte 20 innerhalb der Breite der Stützwinde 10 bzw. der Befestigungsseite 17'.

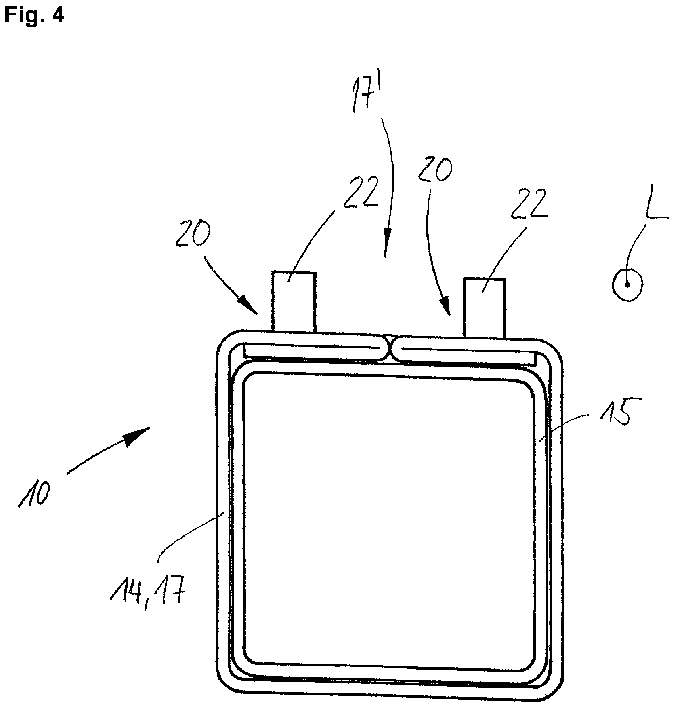

**Fig. 4** zeigt eine weitere bevorzugte Ausführungsform einer Stützwinde 10 mit einer aufgedoppelten Außenwand 17. Die in Figur 4 dargestellte Ausführungsform entspricht im Wesentlichen der in Figur 3 dargestellten Ausführungsform, wobei lediglich der Umformprozess anders geführt wurde.

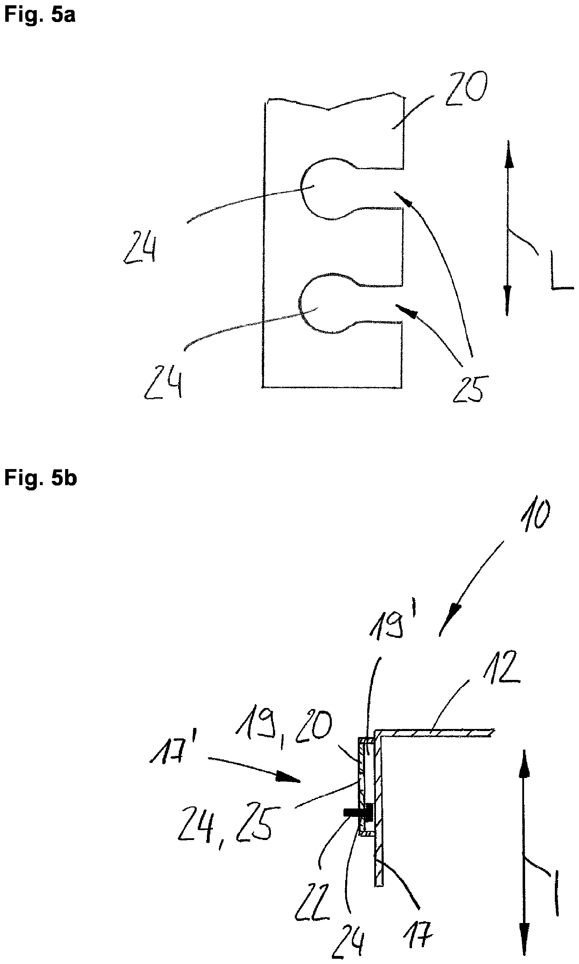

**Fig. 5a** zeigt eine Teilansicht einer bevorzugten Ausführungsform eines Befestigungsabschnitts 20 mit zwei Anordnungsabschnitten 24, welche quer zu einer Längsachse L über jeweils einen Zugangsbereich 25 zugänglich sind.

**Fig. 5b** zeigt eine bevorzugte Ausführungsform einer Stützwinde 10 in einer teilweisen Schnittdarstellung quer zu einer Längsachse L. Ein Befestigungsabschnitt 20 ist hier als Verstärkungselement 19 ausgebildet, welches im Wesentlichen senkrecht zu einer Befestigungsseite 17' zu einer Außenwand 17 beabstandet ist, so dass ein Zwischenraum 19' gebildet ist. Dargestellt ist weiter ein in einem Anordnungsabschnitt 24 angeordnetes Befestigungselement 22. Darüber ist ein weiterer Anordnungsabschnitt 24 erkennbar, welcher über einen Zugangsbereich 25 im Wesentlichen quer zur Längsachse und parallel zur Befestigungsseite 17' zugänglich ist.

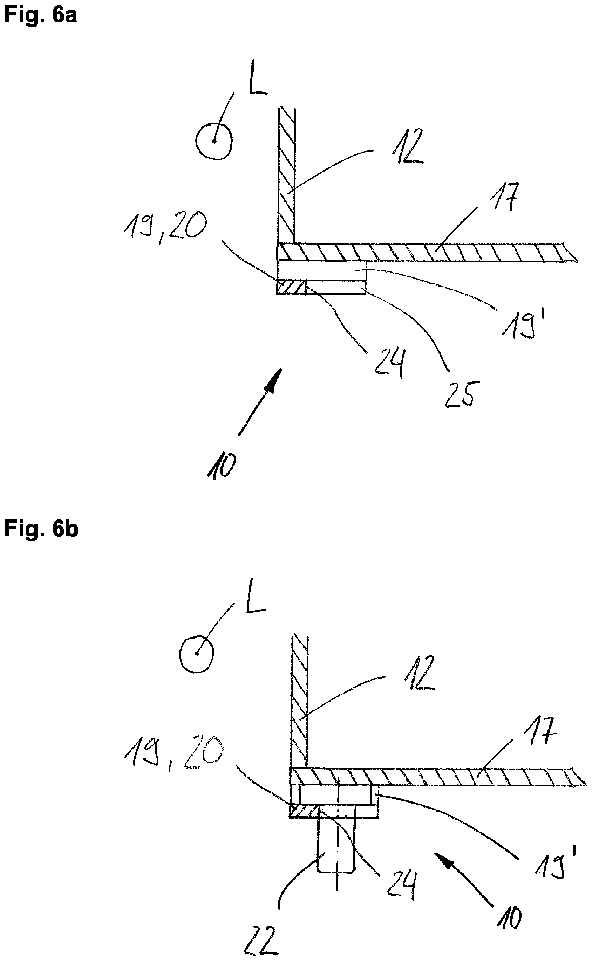

**Fig. 6a** zeigt eine bevorzugte Ausführungsform einer Stützwinde 10 in einer teilweisen Schnittdarstellung quer zu einer Längsachse L. Dargestellt ist ein Teil einer Getriebebox 12, an welcher ein als Befestigungsabschnitt 20 ausgebildetes Verstärkungselement 19 angeordnet ist. Dabei wird zwischen einer Außenwand 17 der Getriebebox 12 und dem Verstärkungselement 19 ein Zwischenraum 19' gebildet. Durch die Schnittdarstellung ist ein Anordnungsabschnitt 24 erkennbar, welcher über einen Zugangsbereich 25 parallel zur Außenwand 17 zugänglich ist.

**Fig. 6b** zeigt die aus Figur 6a bekannte Ausführungsform einer Getriebebox 12, wobei hier ein Befestigungselement 22 innerhalb des Anordnungsabschnitts 24 angeordnet ist. Deutlich zu sehen ist, dass ein Kopf des als Schraube ausgebildeten Befestigungselements 22 mit Vorteil genau in den Zwischenraum 19' passt.

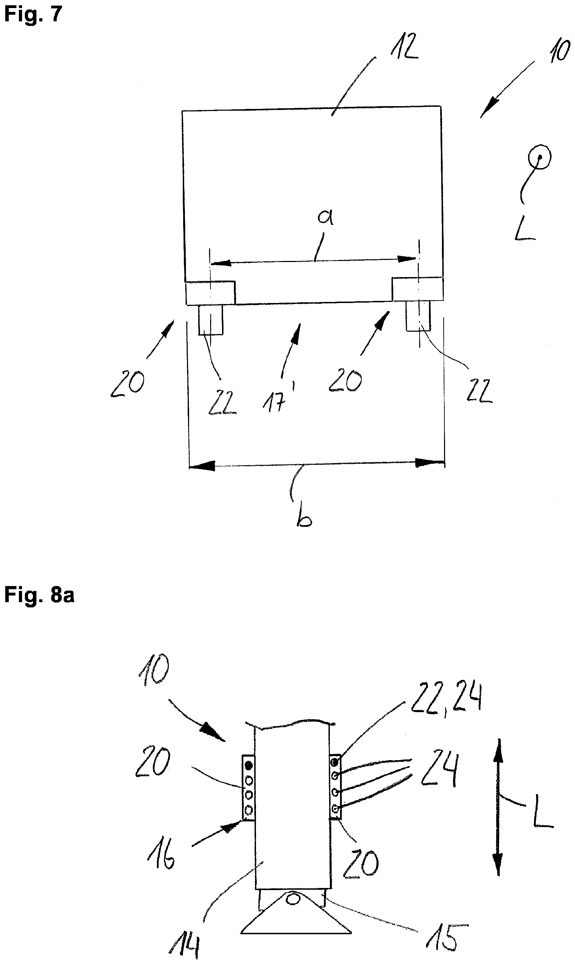

**Fig. 7** zeigt eine bevorzugte Ausführungsform einer Stützwinde 10 entlang einer Längsachse L. Zu sehen ist eine Getriebebox 12 in einer Draufsicht, welche an einer Befestigungsseite 17' zwei Befestigungsabschnitte 20 mit jeweils zumindest einem Befestigungselement 22 aufweist. Deutlich erkennbar ist, dass eine Breite der Getriebebox 12 bzw. deren Befestigungsseite 17' größer ist als ein Abstand a der Befestigungselemente 22.

**Fig. 8a** zeigt eine bevorzugte Ausführungsform einer Stützwinde 10 in einer Seitenansicht. Die Stützwinde 10 umfasst ein Außenstützrohr 14, innerhalb dessen ein Innenstützrohr 15 angeordnet und entlang einer Längsachse L verlagerbar ist.

An dem Innenstützrohr 15 ist ein Stützfuß (ohne Bezugszeichen) angeordnet. An dem Außenstützrohr 14 ist eine Befestigungsplatte 16 angeordnet, welche zwei Befestigungsabschnitte 20 mit in einer Reihe angeordneten Anordnungsabschnitten 24 aufweist. An den obersten Anordnungsabschnitten 24 ist je ein Befestigungselement 22 angeordnet.

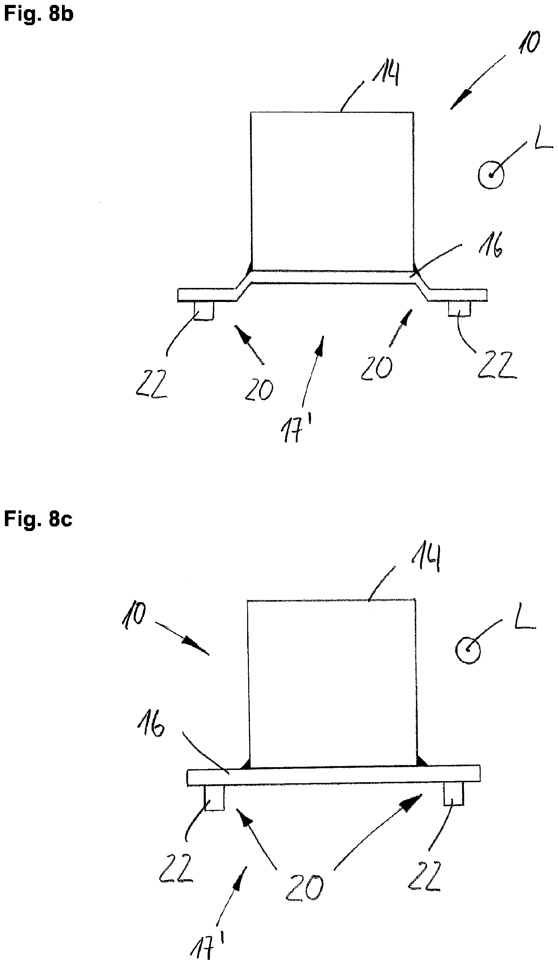

**Fig. 8b** zeigt eine weitere bevorzugte Ausführungsform einer Stützwinde 10 entlang einer Längsachse L. Zu sehen ist ein Außenstützrohr 14, an welchem eine Befestigungsplatte 16 angeordnet ist, welche eine Befestigungsseite 17' bildet. Die Befestigungsplatte 16 weist zwei Befestigungsabschnitte 20 mit je zumindest einem Befestigungselement 22 auf. Die Befestigungsseite 17' muss nicht zwingend flach oder eben ausgebildet sein, sondern kann, wie in diesem Fall, auch beispielsweise gestuft ausgebildet sein.

**Fig. 8c** zeigt eine weitere bevorzugte Ausführungsform einer Stützwinde 10 entlang einer Längsachse L. An einem Außenstützrohr 14 ist eine als gerade Platte ausgebildete Befestigungsplatte 16 ausgebildet, welche zwei Befestigungsabschnitte 20 aufweist. Die Befestigungsabschnitte 20 umfassen an einer Befestigungsseite 17' der Befestigungsplatte 16 jeweils zumindest ein Befestigungselement 22.

### Bezugszeichenliste

- 10: Stützwinde
- 12: Getriebebox
- 14: Außenstützrohr
- 15: Innenstützrohr
- 16: Befestigungsplatte
- 17: Außenwand
- 17': Befestigungsseite
- 19: Verstärkungselement
- 19': Zwischenraum
- 20: Befestigungsabschnitt
- 22: Befestigungselement
- 24: Anordnungsabschnitt
- 25: Zugangsbereich
- 26: Montageöffnung
- 27: Aussparung
- L: Längsachse
- a: Abstand
- b: Breite
- d20: Wanddicke Befestigungsabschnitt
- d17: Wanddicke Außenwand

## Patentansprüche

1. Stützwinde (10), insbesondere für Anhänger von Nutzfahrzeugen,
wobei die Stützwinde (10) sich entlang einer Längsachse (L) erstreckt und ein Außenstützrohr (14) umfasst,
wobei das Außenstützrohr (14) eine Außenwand (17) umfasst,
wobei die Außenwand (17) eine Befestigungsseite (17') umfasst,
wobei im Bereich der Befestigungsseite (17') zumindest ein Befestigungsabschnitt (20) ausgebildet ist,
wobei der Befestigungsabschnitt (20) ausgelegt ist, die Stützwinde (10) an einem weiteren Element, insbesondere einem Anhänger, zu befestigen und/oder anzuordnen,
wobei der Befestigungsabschnitt (20) zur Anordnung und/oder Befestigung zumindest zweier Befestigungselement (22) zumindest zwei Anordnungsabschnitte (24) umfasst, wobei ein Verhältnis eines Abstands (a) der Befestigungselemente (22) und/oder der Anordnungsabschnitte (24) zweier Befestigungsabschnitte (20) quer zur Längsachse (L) der Stützwinde (10) zu einer Breite (b) des Außenstützrohrs (14) in diesem Bereich kleiner 1 ist, **dadurch gekennzeichnet, daß**
die Außenwand (17) zumindest eine Montageöffnung (26) aufweist, welche einen Zugang zum Anordnungsabschnitt (24) von einer Innenseite der Stützwinde (10) bereitstellt,
wobei die Montageöffnung (26) durch das Verfahren eines Innenstützrohrs (15) der Stützwinde (10) entlang der Längsachse (L) verschließbar ist, wobei die Montageöffnung (26) insbesondere in einer ersten bzw. Ruheposition des Innenstützrohrs (15) verschlossen ist.

2. Stützwinde (10), insbesondere für Anhänger von Nutzfahrzeugen,
wobei die Stützwinde (10) sich entlang einer Längsachse (L) erstreckt und eine Getriebebox (12) umfasst,
wobei die Getriebebox (12) eine Außenwand (17) umfasst,
wobei die Außenwand (17) eine Befestigungsseite (17') umfasst,
wobei im Bereich der Befestigungsseite (17') zumindest ein Befestigungsabschnitt (20) ausgebildet ist,
wobei der Befestigungsabschnitt (20) ausgelegt ist, die Stützwinde (10) an einem weiteren Element, insbesondere einem Anhänger, zu befestigen und/oder anzuordnen,
wobei der Befestigungsabschnitt (20) zur Anordnung und/oder Befestigung zumindest zweier Befestigungselement (22) zumindest zwei Anordnungsabschnitte (24) umfasst, wobei ein Verhältnis eines Abstands (a) der Befestigungselemente (22) und/oder der Anordnungsabschnitte (24) zweier Befestigungsabschnitte (20) quer zur Längsachse (L) der Stützwinde (10) zu einer Breite (b) der Getriebebox (12) in diesem Bereich kleiner 1 ist, **dadurch gekennzeichnet, daß**
die Außenwand (17) zumindest eine Montageöffnung (26) aufweist, welche einen Zugang zum Anordnungsabschnitt (24) von einer Innenseite der Stützwinde (10) bereitstellt.

3. Stützwinde (10) nach Anspruch 1 oder 2,
wobei der Befestigungsabschnitt (20) durch die Außenwand (17) und/oder durch ein Verstärkungselement (19) gebildet ist, welches an der Befestigungsseite (17') angeordnet ist.

4. Stützwinde (10) nach einem der vorhergehenden Ansprüche,
wobei eine Wanddicke (d20) des Befestigungsabschnitts (20) größer, vorzugsweise etwa 1,1 bis 3,5 mal größer, als eine Wanddicke (d17) der Außenwand ist, und
wobei die Wanddicke (d20) des Befestigungsabschnitts (20) insbesondere durch ein Anordnen des Verstärkungselements (19) und/oder ein Umformen der Außenwand (17) bestimmbar ist, wobei das Umformen eine Aufdopplung der Außenwand (17) bewirken kann.

5. Stützwinde (10) nach einem der vorhergehenden Ansprüche,
wobei ein Verhältnis eines Abstands (a) der Befestigungselemente (22) und/oder der Anordnungsabschnitte (24) zweier Befestigungsabschnitte (20) quer zur Längsachse (L) der Stützwinde (10) zu einer Breite (b) der Getriebebox (12) oder des Außenstützrohrs (14) in diesem Bereich etwa 0,7 bis 0,9, ist.

6. Stützwinde (10) nach einem der vorhergehenden Ansprüche,
wobei die Außenwand (17) eine zur Innenseite der Stützwinde (10) hin gerichtete Aussparung (27) aufweist, in welcher das Befestigungselement (22) zumindest bereichsweise derart anordenbar ist, dass das Verfahren des Innenstützrohrs (15) entlang der Längsachse (L) durch das Befestigungselement (22) zweckmäßigerweise nicht behindert ist.

7. Stützwinde (10) nach einem der Ansprüche 3-6,
wobei das Verstärkungselement (19) zur Außenwand (17) und/oder aufgedoppelte Außenwände (17) zumindest bereichsweise im Wesentlichen senkrecht zur Befestigungsseite (17') derart voneinander beabstandet sind, dass ein Zwischenraum (19') gebildet ist.

8. Stützwinde (10) nach einem der vorhergehenden Ansprüche,
wobei der Anordnungsabschnitt (24) zumindest einen Zugangsbereich (25) aufweist, welcher eine Anordnung des Befestigungselements (22) quer zur Längsachse (L) ermöglicht.

9. Stützwinde (10) nach einem der vorhergehenden Ansprüche,
wobei sich das Befestigungselement (22) im Wesentlichen von dem Befestigungsabschnitt (20) weg erstreckt, und
wobei der Befestigungsabschnitt (20) und das Befestigungselement (22) insbesondere einstückig ausgebildet sind.

## Claims

1. Support winch (10), in particular for trailers of utility vehicles,
wherein the support winch (10) extends along a longitudinal axis (L) and comprises an outer support tube (14),
wherein the outer support tube (14) comprises an outer wall (17), the outer wall (17) comprising a fastening side (17'),
at least one fastening section (20) being formed in the region of the fastening side (17'),
the fastening section (20) being designed to fasten and/or arrange the support winch (10) on a further element, in particular a trailer,
wherein the fastening section (20) for arranging and/or fastening at least two fastening elements (22) comprises at least two arrangement sections (24), wherein a ratio of a distance (a) of the fastening elements (22) and/or the arrangement sections (24) of two fastening sections (20) transversely to the longitudinal axis (L) of the support winch (10) to a width (b) of the outer support tube (14) in this region is less than 1,
**characterised in that**
the outer wall (17) has at least one assembly opening (26) providing access to the arrangement section (24) from an inner side of the support winch (10),
wherein the assembly opening (26) can be closed by moving an inner support tube (15) of the support winch (10) along the longitudinal axis (L),
wherein the assembly opening (26) is closed in particular in a first or rest position of the inner support tube (15).

2. Support winch (10), in particular for trailers of utility vehicles,
wherein the support winch (10) extends along a longitudinal axis (L) and comprises a gearbox (12),
wherein the gearbox (12) comprises an outer wall (17),
wherein the outer wall (17) comprises a fastening side (17')
wherein at least one fastening section (20) is formed in the region of the fastening side (17'),
wherein the fastening section (20) is designed to fasten and/or arrange the support winch (10) on a further element, in particular a trailer,
wherein the fastening section (20) for arranging and/or fastening at least two fastening elements (22) comprises at least two arrangement sections (24), wherein a ratio of a distance (a) of the fastening elements (22) and/or the arrangement sections (24) of two fastening sections (20) transverse to the longitudinal axis (L) of the support winch (10) to a width (b) of the gearbox (12) in this region is less than 1,
**characterised in that**
the outer wall (17) has at least one assembly opening (26) providing access to the arrangement section (24) from an inner side of the support winch (10).

3. Support winch (10) according to claim 1 or 2,
wherein the fastening section (20) is formed by the outer wall (17) and/or by a reinforcing element (19) arranged on the fastening side (17').

4. Support winch (10) according to one of the preceding claims,
wherein a wall thickness (d20) of the fastening section (20) is greater, preferably about 1.1 to 3.5 times greater, than a wall thickness (d17) of the outer wall, and
wherein the wall thickness (d20) of the fastening section (20) can be determined in particular by arranging the reinforcing element (19) and/or by deforming the outer wall (17), wherein the deforming can cause the outer wall (17) to double.

5. Support winch (10) according to one of the preceding claims,
wherein a ratio of a distance (a) of the fastening elements (22) and/or the arrangement sections (24) of two fastening sections (20) transverse to the longitudinal axis (L) of the support winch (10) to a width (b) of the gear box (12) or the outer support tube (14) in this range is approximately 0.7 to 0.9.

6. Support winch (10) according to one of the preceding claims,
wherein the outer wall (17) has a recess (27) directed towards the inside of the support winch (10), in which recess (27) the fastening element (22) can be arranged, at least in some areas, in such a way that the movement of the inner support tube (15) along the longitudinal axis (L) is expediently not impeded by the fastening element (22).

7. Support winch (10) according to one of claims 3-6,
wherein the reinforcing element (19) from the outer wall (17) and/or doubled outer walls (17) are spaced from each other at least in regions substantially perpendicular to the fastening side (17') in such a way that an intermediate space (19') is formed.

8. Support winch (10) according to one of the preceding claims,
wherein the arrangement section (24) has at least one access area (25) which allows the fastening element (22) to be arranged transversely to the longitudinal axis (L).

9. Support winch (10) according to one of the preceding claims,
wherein the fastening element (22) extends substantially away from the fastening section (20), and
wherein the fastening section (20) and the fastening element (22) are in particular formed in one piece.

## Revendications

1. Béquille (10), en particulier pour des remorques de véhicules utilitaires, dans laquelle
la béquille (10) s'étend le long d'un axe longitudinal (L) et comprend un tube de support extérieur (14)
le tube de support extérieur (14) présente une paroi extérieure (17),
la paroi extérieure (17) comprend un côté de fixation (17'),
au moins une portion de fixation (20) est réalisée au niveau du côté de fixation (17'),
la portion de fixation (20) est conçue pour fixer et/ou agencer la béquille (10) sur un autre élément, en particulier sur une remorque,
la portion de fixation (20) comprend au moins deux portions d'agencement (24) pour agencer et/ou fixer au moins deux éléments de fixation (22),
un rapport d'une distance (a) des éléments de fixation (22) et/ou des portions d'agencement (24) de deux portions de fixation (20) transversalement à l'axe longitudinal (L) de la béquille (10) sur une largeur (b) du tube de support extérieur (14) est inférieur à 1, dans cette zone, **caractérisée en ce que**
la paroi extérieure (17) présente au moins une ouverture de montage (26) qui permet un accès à la portion d'agencement (24) depuis un côté intérieur de la béquille (10),
l'ouverture de montage (26) peut être refermée par le déplacement d'un tube de support intérieur (15) de la béquille (10) le long de l'axe longitudinal (L), l'ouverture de montage (26) étant fermée en particulier dans une première position ou position de repos du tube de support intérieur (15).

2. Béquille (10), en particulier pour des remorques de véhicules utilitaires, dans laquelle
la béquille (10) s'étend le long d'un axe longitudinal (L) et comprend une boîte d'engrenage (12),
la boîte d'engrenage (12) présente une paroi extérieure (17),
la paroi extérieure (17) comprend un côté de fixation (17'),
au moins une portion de fixation (20) est réalisée au niveau du côté de fixation (17'),
la portion de fixation (20) est conçue pour fixer et/ou agencer la béquille (10) sur un autre élément, en particulier sur une remorque,
la portion de fixation (20) comprend au moins deux portions d'agencement (24) pour agencer et/ou fixer au moins deux éléments de fixation (22),
un rapport d'une distance (a) des éléments de fixation (22) et/ou des portions d'agencement (24) de deux portions de fixation (20) transversalement à l'axe longitudinal (L) de la béquille (10) sur une largeur (b) de la boîte d'engrenage (12) est inférieur à 1, dans cette zone, **caractérisée en ce que**
la paroi extérieure (17) présente au moins une ouverture de montage (26) qui permet un accès à la portion d'agencement (24) depuis un côté intérieur de la béquille (10).

3. Béquille (10) selon la revendication 1 ou 2,
dans laquelle
la portion de fixation (20) est formée par la paroi extérieure (17) et/ou par un élément de renforcement (19) qui est disposé sur le côté de fixation (17').

4. Béquille (10) selon l'une des revendications précédentes,
dans laquelle
une épaisseur de paroi (d20) de la portion de fixation (20) est supérieure, de préférence d'environ 1,1 à 3,5 fois, à une épaisseur de paroi (d17) de la paroi extérieure, et
l'épaisseur de paroi (d20) de la portion de fixation (20) peut être déterminée en particulier par un agencement de l'élément de renforcement (19) et/ou par une mise en forme de la paroi extérieure (17), la mise en forme pouvant entraîner une doublure de la paroi extérieure (17).

5. Béquille (10) selon l'une des revendications précédentes,
dans laquelle
un rapport d'une distance (a) des éléments de fixation (22) et/ou des portions d'agencement (24) de deux portions de fixation (20) transversalement à l'axe longitudinal (L) de la béquille (10) sur une largeur (b) de la boîte d'engrenage (12) ou du tube de support extérieur (14) est d'environ 0,7 à 0,9, dans cette zone.

6. Béquille (10) selon l'une des revendications précédentes,
dans laquelle
la paroi extérieure (17) présente une échancrure (27) qui est dirigée vers le côté intérieur de la béquille (10) et dans laquelle peut être agencé ledit élément de fixation (22) au moins localement de telle sorte que le déplacement du tube de support intérieur (15) le long de l'axe longitudinal (L) n'est judicieusement pas entravé par l'élément de fixation (22).

7. Béquille (10) selon l'une des revendications 3 à 6,
dans laquelle
l'élément de renforcement (19) et la paroi extérieure (17) et/ou des parois extérieures doublées (17) sont mutuellement espacé(e)s au moins localement sensiblement perpendiculairement au côté de fixation (17') de manière à former un espace intermédiaire (19').

8. Béquille (10) selon l'une des revendications précédentes,
dans laquelle
la portion d'agencement (24) présente au moins une zone d'accès (25) permettant d'agencer l'élément de fixation (22) transversalement à l'axe longitudinal (L).

9. Béquille (10) selon l'une des revendications précédentes,
dans laquelle
l'élément de fixation (22) s'étend sensiblement en éloignement de la portion de fixation (20), et
la portion de fixation (20) et l'élément de fixation (22) sont réalisés en particulier d'un seul tenant.
